# EUROPEAN PATENT APPLICATION

(11) **EP 0 576 407 A1**
(43) Date of publication of application: **29.12.1993**
(21) Application number: 93830267.6
(22) Date of filing: 22.06.1993
(51) Int. Cl.: B65G 65/48

(54) **A silo for granular materials, in particular for containing antifreeze salts for use on road surfaces**

(30) Priority: 23.06.1992 IT BZ920023
(71) Applicant: AGRISTRADE S.r.l., I-39100 Bolzano (IT)
(72) Inventor: Marin, Silvano, I-39100 Bolzano (IT)
(74) Representative: Lanzoni, Luciano

(57) **Abstract**

The invention relates to a silo for granular material (5), in particular for the containing of antifreeze salts for use on road surfaces. The silo is constituted by a tank (1), preferably cylindrical, specially constrained to a first constraining structure (2). The tank (1) in which granular materials (5) are conserved, is limited at one of its ends by a structure herein called a rotating structure (3), to which activating means (9) are associated, as well as collecting means (7) for extracting the granular material (5) from the tank (1) and conveying means (8) to transport the extracted granular material (5) to a collection zone (10).

## Description

The invention relates to a silo for granular materials, in particular for the containing of antifreeze salts for use on road surfaces. Thus the invention applies to the field of stockage of loose materials.

The prior art provides a first solution to the conservation of salts or, in general, hygroscopic granular material in a first type of silo, from which the material is dispensed from the bottom, employing only the force of gravity. Such silos are generally constituted by a cylindrical part and an underlying conical part with an opening angle of about 30 degrees, and they generally function in a continuous cycle.

Although on the one hand a silo dispensing its material through force of gravity has the advantage of being an intrinsically simple whole, on the other hand its functioning is conditioned by the fluency of the material contained. This limitation is particularly evident when the contained material is hygroscopic, since when the material absorbs humidity it becomes compacted and agglomerates, thus losing the fluidity necessary in order for it to be dispensed by force of gravity.

A further drawback of the silo of the gravity-type dispensing method is that the truncoconical part, for geometric reasons, contributes limitedly to increasing the volumetric capacity of the silo itself while at the same time, considering that the opening angle of the cone trunk is about 30 degrees, contributing to an increas in the total height of the silo.

It follows that a silo of the type dispensing by force of gravity, with a capacity of about 500 cubic metres and a diameter of about 6 metres, when set up reaches a height of about 25-30 metres. Such a long vertical development brings about an unacceptable interruption to the continuity of the landscaped as well as an unpleasant impact on the eye.

A further drawback is that the material contained, having internal friction, follows, during the dispensing phase, preferential fluency directions, thus forming discontinuities in the stratification of the material itself, known by the technical terms of bridges and upturned cones.

The prior art also teaches, in a second solution, the conservation of salts or in general hygroscopic granular material in a second type of silo, from which the material is dispensed by means of mechanical extractors acting on the free surface of the salts.

Such a system of dispensing leads to the unloading and loading phases of the silo being cyclically discontinuous. This means that the silo must disadvantageously be unloaded completely before it can be refilled.

Furthermore the material most subject to compression, that is the material at the bottom area of the silo, is extracted later than the material in the higher part of the silo and thus suffers more from the compacting phenomenon.

A further drawback of this second sort of known silo is that the extraction organs, being inside the silo, are difficult to reach and thus, when a breakdown occurs, or even for simple maintenance purposes, the time needed to intervene is too long and the reliability of the entire plant is reduced.

An essential aim of the present invention is thus that of obviating the cited drawbacks inherent in the two known type of silo as herein illustrated, by providing a silo for granular materials, in particular for the conservation of antifreeze salts for road use, which, in direct comparison with silos of known type, has more contained vertical dimensions and from which the hygroscopic granular materials can be extracted continuously, independently of silo loading operations, even in cases where the contents have been compacted due to any kind of humidity absorbed.

Further aims of the silo according to the invention are:
a) to to enable the extraction from the silo of materials of any granulometry and internal friction angle;
b) to remove the contained materials uniformly over all of its rest surface;
c) to enable a regulation of contained material extraction according to the requirements of mixtures with other materials, that is, in desired shares;
d) to prevent the entry of humidity from the atmosphere;
e) to ease the eventual maintenance operations on the extraction organs and, in the case of a breakage of said extraction organs, to ease their substitution, thus obtaining a very high level of reliability;
f) to enable the extraction organs an empty functioning.

These and other aims besides are all attained by the silo according to the invention, which comprises a tank for the granular materials, connected to a first constraining structure, and a rotating structure, rotatable about an axis coinciding with or parallel to a longitudinal axis of the tank and connected by means of supports to a second constraining structure, the tank being associated to the rotating structure at one end by association means, and the rotating structure having self-activating means as well as collecting means of the granular material in the tank and as well as conveying means of the granular material towards a collection zone of the said materials.

Further characteristics and advantages of the present invention will better emerge from the detailed description that follows, of an embodiment of the invention, herein illustrated purely in the form of a non-limiting example in the accompanying figures, in which:
- Figure 1 shows a schematic vertical section of the silo of the invention, in which elements not normally seen are represented for evidencing purposes;
- Figure 2 shows a series of horizontal schematic sections of the silo;
- Figure 3 shows an enlargement of the part of the silo which is enclosed by circle A of figure 1;
- figure 4 shows a further schmematic horizontal section of the silo.

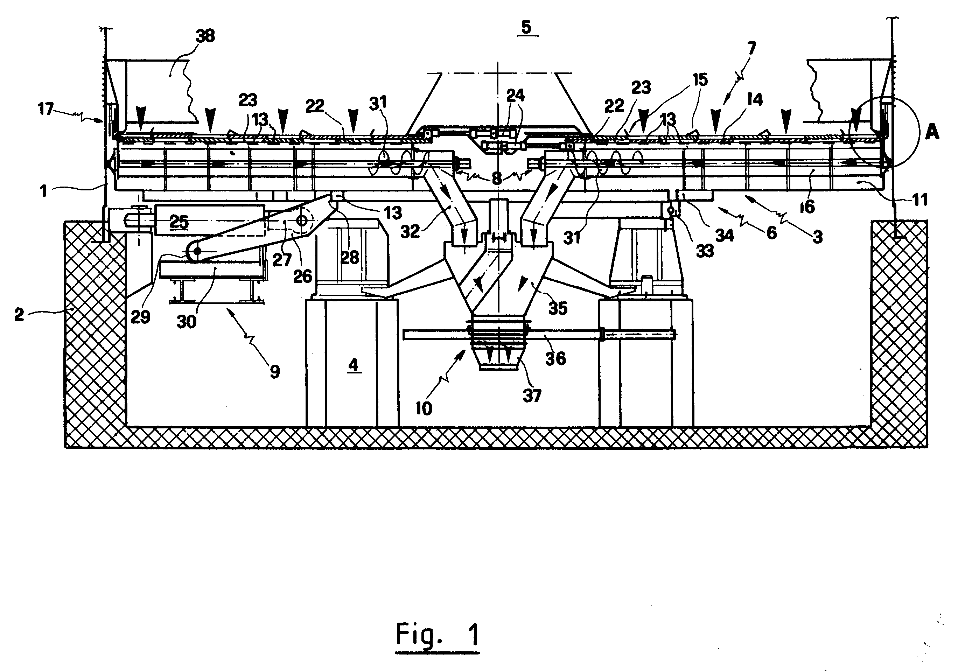

With reference to figure 1, the silo, according to the invention, is constituted by a tank 1, preferably cylindrical, and constrained to a first constraining structure 2. The tank 1, in which the granular material, in particular antifreeze salts 5 for road use is contained, is limited at an inferior end by a structure herein described in its entirety as a rotating structure 3, to which rotating structure 3 collecting means 26 are associated for extracting the salts 5 from the tank 1 and conveying means 8 for conveying the extracted salts 5 to a collection zone 10 of the salts 5.

The said rotating structure 3 is constituted by a body 11 of a substantially annular shape, consituted in its turn by a union of eight sectors 12. On the inferior external surface of the said body 11 and around a complete circumference of it, a plurality of engagement elements 13 are arranged, specially shaped to interact with activating means 9 of the rotating structure 3. On the same inferior external surface of the body 11 a connecting element 34 is arranged, having a substantially annular shape, for its connection to support means 6 of the rotating structure 3.

A plurality of openings 14 are realised on the superior external surface of the said body 11 along at least one diametral direction, while internally of said body 11 and again along the same diametral direction housings 16 for the conveying means 8 are realised. Apart from this, knives 15 are arranged in proximity to the openings 14 as are association means 17 of the rotating structure 3 to the tank 1 along all of the perimeter of the body 11.

The rotating structure 3 is connected to the second constraining structure 4 through the connecting element 34 and the support means 6 aimed at guaranteeing the possibility of rotating about a vertical axis.

In particular, as illustrated in figure 1, the said support means can be constituted by a fifth wheel 33.

The rotation of the rotating structure 3 is effected by means of activating means 9.

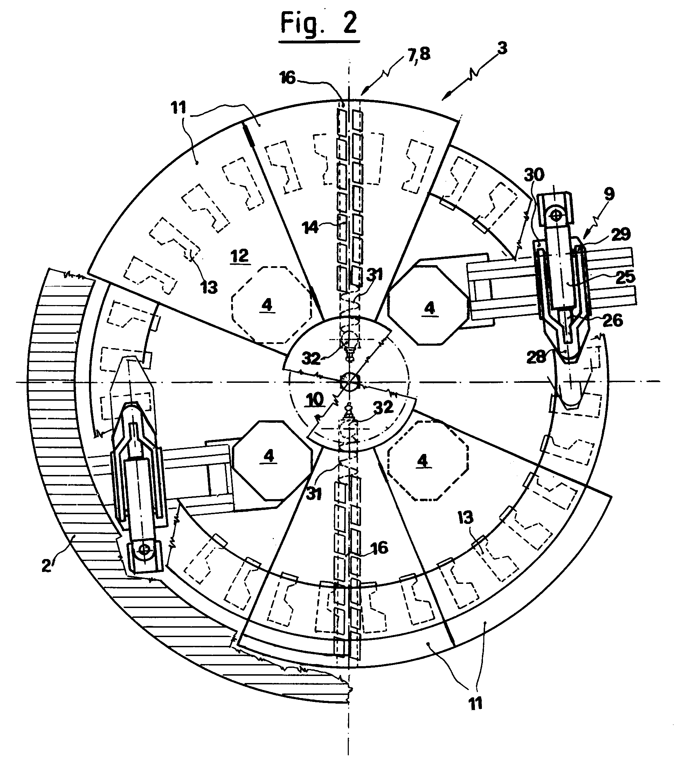

In particular, as illustrated in figures 1 and 2, said activating means 9 can be constituted by a pair of rocker arms 26, each hinged to an end of a stem 27 of a second hydraulic cylinder 25. The rocker arm 26 is shaped is such a way as to be constantly subject, due to its weight, to a moment of thrust about the hinge axis which is such as to press constantly one of its ends 28 against the engagement elements 13 while a second end of it slidably rests on a rest 30.

The collecting means 7 are constituted by knives 15, with openings 14 permitting the salts to pass out of the tank 1, and by plates 22 equipped with holes 23 and activated by first hydraulic cylinders 24 and which alternating translating movements along the diametral direction of the openings 14 permit alternatingly the opening and the closure of the said openings 14 during respectively the salts 5 extraction phase from the tank 1 and the closed phase of the silo.

The conveying means 8 of the salts 5 are constituted by at least one motorised Archimedes' screw 31, arranged in the housings 16 and by at least one pipe 32 carrying the salts 5 to the collection zone 10.

The collection zone 10 is constituted by a first hopper 35 whereinto the extracted salts 5 are unloaded, by a motorised gate 36 and by a second hopper 37 which unloads the salts 5 on to distancing means (not illustrated) of the salt from the silo.

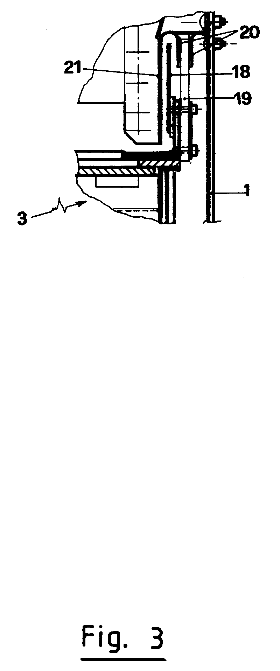

Figure 3 shows the association means 17 arranged along all of the perimeter of the body 11 of the rotating structure 3.

The said association means 17 prevent the exiting of the salts 5 from the tank 1 and also prevent the influx of external humidity into the tank 1.

They are constituted by a first annular element 18 and a third annular element 18, arranged so as to form a labyrinth which acts as a physical barrier against the exiting of the salts 5, as well as by a second annular element 19, slidable in a guide 20, which acts as a barrier to the influx of humidity into the tank 1 from the outside.

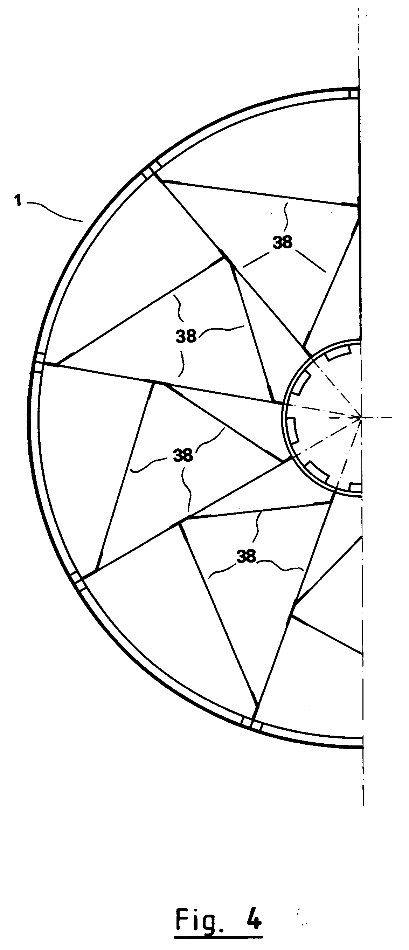

As illustrated in figure 4, inside the tank 1 a plurality of elements 38 are arranged, longitudinally extended and reciprocally connected in such a way as to form a single structure, constrained to the tank 1 and aimed at preventing a rotation of the mass of the salts 5 subsequent to being drawn by the rotating structure 3 on which they rest.

Obviously the silos of the invention can be equipped with all of the known devices and components according to the state of the art. For example, the mounting and dismounting stands have not been described, nor have electrical command organs and batching organs, and so on.

## Claims

1. A silo for granular material (5), in particular for containing antifreeze salts for use on road surfaces, characterised in that it comprises a tank (1) for the granular material (5), connected to a first constraining structure (2), and a rotating structure (3), rotatable about an axis coinciding with or parallel to a longitudinal axis of the tank (1) and connected by means of supports (6) to a second constraining structure (4), the tank (1) being associated to the rotating structure (3) at one end by association means (17), and the rotating structure (3) having self-activating means (9) as well as collecting means (7) of the granular material (5) in the tank (1) and as well as conveying means (8) of the granular material (5) towards a collection one (10) of the said material (5).

2. A silo as in claim 1, characterised in that said rotating structure (3) is constituted by a body (11) of a substantially annular shape, and in that it has engagement elements (13) arranged on an external surface of said body (11) facing said second constraining structure (4) and along all of a circumference of said body (11), said engagement elements (13) being specially shaped for engagement with said activating means (9); a connecting element (34) being arranged on an external surface of said body (11) facing said second constraining structure (4) , said connecting element (34) being of substantially annular shape and being aimed at connecting said body (11) to said support means (6); a plurality of openings (14) being realised on the external surface of said body (11) facing said tank (1) and along at least one diametral direction of said body (11); and housings (16) being realised internally to said body (11) and along said diametral direction for the said conveying means (8), knives (15) being arranged in proximity to said openings (14) and means of association (17) of said rotating structure (3) with said tank (1) along all of a perimeter of said body (11).

3. A silo as in claims 1 and 2, characterised in that said association means (17) are constituted by a first annular element (18), solid to the body (11), and by a third annular element (21), together arranged to form a labyrinth, as well as by a second annular element (19), solid to the body (11) and slidan+ble in a guide (20) which guide (20) is solid to said tank (1).

4. A silo as in claims 1 and 2, characterised in that said collecting means (7) are constituted by said knives (15), and by said openings (14) which permit exit from the tank (1) of the said granular material (5) and by plates (22) equipped with holes (23), arranged internally to said body (11) and along a diametral realisation direction of said openings (14), acitvated by first hydraulic cylinders (24) and which translating movements along the said diametral realisation direction of said openings (14) allow the exit from the said tank (1) of said granular material (5), when there is a partial or total superposition of said openings (14) on said holes (23), and do not allow the said exit in the absence of such a superposition.

5. A silo as in claims 1 and 2, characterised in that said activating means (9) are consitituted by at least one rocker arm (26), hinged to a stem (27) of a second second hydraulic cylinder (25), said rocker arm (26) being conformed in such a way as to be constantly subject, due to its own weight, to a thrust moment about a hinge axis such as constantly to press a first end of it (28) against said engagement elements (13) while a second end of it (29) rests slidably on a rest (30).

6. A silo as in claims 1 and 2, characterised in that said conveying means (8) are constituted by at least one motorised Archimedes' screw (31) arranged in said housings (16) and by at least one pipe (32).

7. A silo as in claims 1 and 2, characterised in that said support means (6) are constituted by a fifth wheel (33) clamped to said connecting element (34) and to said constraining structure (4).

8. A silo as in claims 1 and 2, characterised in that said collection zone (10) is constituted by a first hopper (35) connected to said pipe (32), by a motorised gate (36) and by a second hopper (37).

9. A silo as in claims 1 and 2, characterised in that internally to said tank (1) a plurality of elements (38) are arranged, longitudinally extended and reciprocally connected, in such a way as to realise a single structure, constrained to said tank (1) and aimed at preventing a rotation of said granular material (5) by solid drawing with said rotating structure (3).

10. A silo as in claims 1 and 2, characterised in that said tank (1) is cylindrical in shape.

11. A silo as in claims 1 and 2, characterised in that said openings (14) and said holes (23) are rectangular in shape.
